# EUROPÄISCHE PATENTANMELDUNG

(11) **EP 3 486 172 A1**
(43) Veröffentlichungstag der Anmeldung: **22.05.2019**
(21) Anmeldenummer: 18206548.2
(22) Anmeldetag: 15.11.2018
(51) Int. Cl.: B64D 11/06, B64D 11/00

(54) **PERSONENBEFÖRDERUNGSFAHRZEUG**

(30) Priorität: 17.11.2017 EP 17202231
(71) Anmelder: MAGNA STEYR Fahrzeugtechnik AG & Co KG, 8041 Graz (AT)
(72) Erfinder: ERLACHER, Manuel, 9545 Radenthein (AT); HARMUSZ, Sabine, 8410 Weitendorf (AT); HOFER, Bernhard, 8053 Graz (AT)
(74) Vertreter: Zangger, Bernd

(57) **Zusammenfassung**

Ein Personenbeförderungsfahrzeug, umfassend zumindest einen zur Beförderung einer Person (1) vorgesehenen Sitzplatz oder Stehplatz als ersten Passagierplatz (2), und einen zur Beförderung einer weiteren Person (3) vorgesehenen Sitzplatz oder Stehplatz als zweiten Passagierplatz (4), wobei zumindest ein verschiebbares Element (5) im Bereich des ersten Passagierplatzes (2) vorgesehen ist, wobei das verschiebbare Element (5) an der Decke (6) des Personenbeförderungsfahrzeugs befestigt ist, wobei das verschiebbare Element (5) durch die Person (1) auf dem ersten Passagierplatz (2) in eine Geschlossenstellung verschiebbar ist, in welcher das verschiebbare Element (5) eine zumindest halbumfängliche Trennung um die Person (1) zwischen dem ersten Passagierplatz (2) und dem zweiten Passagierplatz (4) bildet, wobei das verschiebbare Element (5) durch die Person (1) auf dem ersten Passagierplatz (2) in eine Offenstellung verschiebbar ist, in welcher das verschiebbare Element (5) keine Trennung zwischen dem ersten Passagierplatz (2) und dem zweiten Passagierplatz (4) bildet.

## Beschreibung

### Gebiet der Erfindung

Die vorliegende Erfindung betrifft ein Personenbeförderungsfahrzeug umfassend zumindest zwei Passagierplätze.

### Stand der Technik

Bekannt sind Personenbeförderungsfahrzeuge, die zumindest einen zur Beförderung einer Person vorgesehenen Sitzplatz oder Stehplatz als ersten Passagierplatz und einen zur Beförderung einer weiteren Person vorgesehenen Sitzplatz oder Stehplatz als zweiten Passagierplatz umfassen, und somit zumindest zwei Passagierplätze umfassen.

Solche Personenbeförderungsfahrzeuge können insbesondere durch Straßen- oder Schienenfahrzeuge, wie Busse und Waggons gebildet werden.

In Personenbeförderungsfahrzeugen haben Passagiere üblicherweise keinen von anderen Passagieren abgetrennten Raum und daher keine bzw. eine nur eingeschränkte Privatsphäre auf ihrem jeweiligen Sitz- oder Stehplatz.

Die Erfindung löst das Problem der fehlenden Privatsphäre in einem solchen Personenbeförderungsfahrzeug.

### Zusammenfassung der Erfindung

Es ist eine Aufgabe der Erfindung, ein Personenbeförderungsfahrzeug in dieser Hinsicht zu verbessern und insbesondere ein Personenbeförderungsfahrzeug anzugeben, dass eine erhöhte Privatsphäre für einen Passagier im Fahrzeug ermöglicht.

Die Lösung der Aufgabe erfolgt durch ein Personenbeförderungsfahrzeug, umfassend zumindest einen zur Beförderung einer Person vorgesehenen Sitzplatz oder Stehplatz als ersten Passagierplatz, und einen zur Beförderung einer weiteren Person vorgesehenen Sitzplatz oder Stehplatz als zweiten Passagierplatz, wobei zumindest ein verschiebbares Element im Bereich des ersten Passagierplatzes vorgesehen ist, wobei das verschiebbare Element an der Decke des Personenbeförderungsfahrzeugs befestigt ist, wobei das verschiebbare Element durch eine Person auf dem ersten Passagierplatz in eine Geschlossenstellung verschiebbar ist, in welcher das verschiebbare Element eine zumindest halbumfängliche Trennung um die Person zwischen dem ersten und dem zweiten Passagierplatz bildet, wobei das verschiebbare Element durch die Person auf dem ersten Passagierplatz in eine Offenstellung verschiebbar ist, in welcher das verschiebbare Element keine Trennung zwischen dem ersten und dem zweiten Passagierplatz bildet.

Erfindungsgemäß ist zumindest ein Element vorgesehen, dass an der Decke des Fahrzeuges platzsparend befestigt ist und das zwischen einer nicht trennenden Offenstellung und einer Geschlossenstellung verschieblich ist. In der Geschlossenstellung bildet das verschiebbare Element zumindest einen "Halbkreis" - der nicht unbedingt rund ausgebildet sein muss - um den betreffenden Passagier auf dem ersten Passagierplatz, verläuft also über zumindest 180 Grad um den ersten Passagierplatz, so dass das verschiebbare Element eine Person auf dem ersten Passagierplatz halbumfänglich umgibt. Dabei erfolgt diese halbumfängliche Anordnung "zwischen dem ersten und dem zweiten Passagierplatz", was bedeutet, dass eine gerade Verbindungslinie zwischen den Mittelpunkten des ersten und zweiten Passagierplatzes diesen Halbkreis bzw. halben Umfang des verschiebbaren Elements schneidet. Der "Halbkreis", also das verschiebbare Element, trennt daher in der Geschlossenstellung den Passagier von einem weiteren Passagier. Ein derartiges verschiebbares Element kann erfindungsgemäß auch durch mehrere, insbesondere miteinander verbundene, Einzelelemente ausgebildet sein.

In der Offenstellung bildet das verschiebbare Element keine Trennung zwischen dem ersten und dem zweiten Passagierplatz, schneidet also die genannte gerade Verbindungslinie zwischen den Mittelpunkten des ersten und zweiten Passagierplatzes nicht.

Durch derartige individuell verschiebbare Elemente in einer Personenbeförderungseinrichtung, haben Passagiere in der Geschlossenstellung einen zumindest halbumfänglich abgegrenzten Raum und eine gewisse Art von Privatsphäre in einem Personenbeförderungsfahrzeug.

Die verschiebbaren Elemente können durch eine beförderte Person zu einer runden oder rechteckigen, offenen oder geschlossenen Form angeordnet werden, welche die beförderte Person ganz oder teilweise umgibt und somit eine Art "Passagierzelle" bildet.

Die verschiebbaren Elemente können dabei von oben und/oder von unten in ihre, die beförderte Person umgebende Betriebsstellung, die Geschlossenstellung, gebracht werden. Die verschiebbaren Elemente sind dann rund um einen oder mehrere Sitzplätze und/oder Stehplätze angeordnet. Eine Befestigung an der "Decke" bedeutet erfindungsgemäß, eine Befestigung oberhalb des Passagierplatzes bzw. von einer Person am Passagierplatz aus gesehen "oben". Möglich ist zum Beispiel auch die Verwendung eines von der Decke im engeren Sinn getrennten Rahmens oder sonstigen Trägers, der zur Befestigung der verschiebbaren Elemente Verwendung finden könnte. Diese Rahmen oder Träger können selbst sowohl an der Decke im engeren Sinn als auch an den Seitenwänden oder auch über ein tragendes Gestell letztendlich am Fahrzeugboden, beispielsweise nur in den Ecken des Fahrgastraumes, abgestützt sein (wie auch die Decke im engeren Sinn letztlich am Fahrzeugboden abgestützt ist). Jedenfalls aber muss das verschiebbare Element aus Sicht der Person auf dem Passagiersitz zunächst oben befestigt sein.

Vorzugsweise umgibt das verschiebbare Element in der Geschlossenstellung die Person auf dem ersten Passagierplatz vollumfänglich, also 360 Grad rund um den Passagier auf dem ersten Passagierplatz.

Das verschiebbare Element ist bevorzugt horizontal verschiebbar und an der Decke des Personenbeförderungsfahrzeugs in einer Führungsschiene geführt. Die Befestigung an der Decke des Fahrzeuges dient dann also auch der Führung der horizontalen Verschiebung des verschiebbaren Elements.

Die Führungsschiene an der Decke des Personenbeförderungsfahrzeugs verläuft vorzugsweise im Wesentlichen kreisförmig oder rechteckig oder quadratisch. Dabei kann die Führungsschiene an der Decke des Personenbeförderungsfahrzeugs zumindest abschnittsweise spiralförmig verlaufen, so dass zumindest abschnittsweise zwei verschiebbare Elemente oder zwei Teile eines verschiebbaren Elementes radial hintereinander angeordnet sein können, da sich die Spiralebenen in diesem Abschnitt überschneiden.

Zusätzlich zur horizontalen Verschiebbarkeit oder alternativ dazu, kann das verschiebbare Element vertikal verschiebbar sein und nach unten in die Geschlossenstellung verschiebbar und nach oben in die Offenstellung verschiebbar sein.

Bevorzugt weist das verschiebbare Element zumindest einen Griff zum Verschieben auf.

Das verschiebbare Element kann insbesondere als Jalousie, Rollo, Vorhang, Plissees, oder als miteinander verbundene plattenförmige Elemente ausgebildet sein.

Das verschiebbare Element kann transparent oder semitransparent ausgebildet sein.

Bevorzugt kann ein zweiter Passagierplatz wie oben beschrieben auch die Rolle eines ersten Passagierplatzes einnehmen und ein erster Passagierplatz auch die Rolle eines zweiten Passagierplatzes einnehmen. Bevorzugt weist daher auch ein weiterer Passagierplatz ein erfindungsgemäßes verschiebbares Element auf. Zumindest ein verschiebbares Element kann somit im Bereich des zweiten Passagierplatzes vorgesehen sein, so dass der zweite Passagierplatz zum ersten Passagierplatz hin ebenso getrennt werden kann, wie umgekehrt.

Bevorzugt sind in einem erfindungsgemäßen Personenbeförderungsfahrzeug mehrere erste und/oder zweite Passagierplätze wie zuvor beschrieben vorgesehen. Die Passagierplätze können dabei jeweils gegenüber einem oder gegenüber mehreren weiteren Passagierplätzen abtrennbar sein.

Das Personenbeförderungsfahrzeug umfasst daher bevorzugt mehrere zur Beförderung je einer Person vorgesehene Sitzplätze oder Stehplätze als erste Passagierplätze, und mehrere zur Beförderung je einer weiteren Person vorgesehene Sitzplätze oder Stehplätze als zweite Passagierplätze, wobei jeweils zumindest ein verschiebbares Element im Bereich jedes ersten Passagierplatzes vorgesehen ist, wobei das jeweilige verschiebbare Element an der Decke des Personenbeförderungsfahrzeugs befestigt ist, wobei das verschiebbare Element jeweils durch eine Person auf dem ersten Passagierplatz in eine Geschlossenstellung verschiebbar ist, in welcher das verschiebbare Element eine zumindest halbumfängliche Trennung um die Person zwischen dem jeweils ersten und zumindest einem zweiten Passagierplatz bildet, wobei das verschiebbare Element jeweils durch die Person auf dem ersten Passagierplatz in eine Offenstellung verschiebbar ist, in welcher das verschiebbare Element keine Trennung zwischen dem jeweiligen ersten und zumindest einem zweiten Passagierplatz bildet.

### Kurzbeschreibung der Zeichnungen

Die Erfindung wird im Folgenden beispielhaft unter Bezugnahme auf die Zeichnungen beschrieben.
- Fig. 1: ist eine schematische seitliche Ansicht (oben) und Ansicht von oben (unten) eines erfindungsgemäßen Personenbeförderungsfahrzeugs.
- Fig. 2: ist eine schematische Ansicht verschiedener Ausführungen von Passierplätzen eines erfindungsgemäßen Personenbeförderungsfahrzeugs.
- Fig. 3: ist eine schematische dreidimensionale Darstellung eines ersten Bereichs in einem Personenbeförderungsfahrzeug gemäß Fig. 1.
- Fig. 4: ist eine schematische dreidimensionale Darstellung des ersten Bereichs gemäß Fig. 3 in einer alternativen Ausführung.
- Fig. 5: ist eine schematische dreidimensionale Darstellung eines zweiten Bereichs in einem Personenbeförderungsfahrzeug gemäß Fig. 1.

### Detaillierte Beschreibung der Erfindung

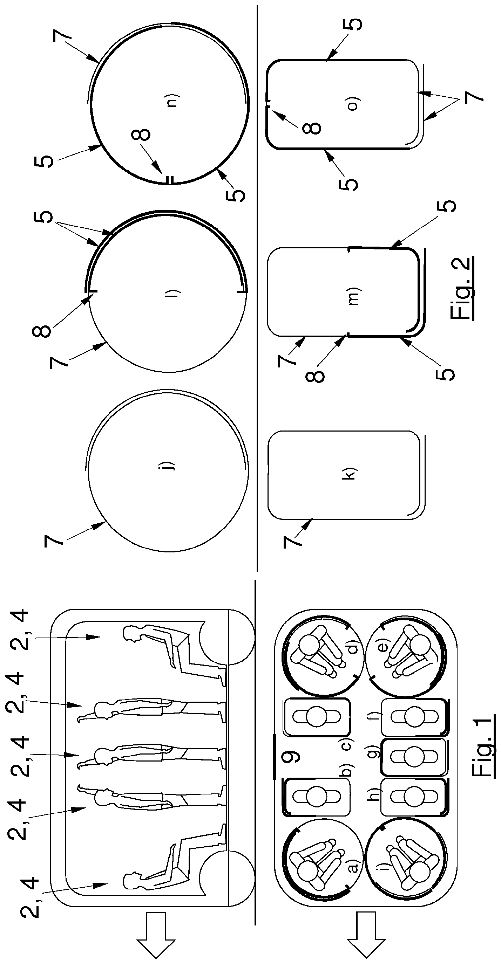

In Fig. 1 ist ein erfindungsgemäßes Personenbeförderungsfahrzeug seitlich (obere Darstellung) und von oben gesehen (untere Darstellung) dargestellt, welches mit vier Sitzplätzen und fünf Stehplätzen ausgestattet ist. Jeder Passagier hat die Möglichkeit sich individuell im Innenraum mittels verschiebbaren Elementen 5 räumlich von den anderen Passagieren zu trennen. Jeder Sitzplatz und Stehplatz des Fahrzeuges ist daher gleichzeitig als erster Passagierplatz 2 und als zweiter Passagierplatz 4 im Sinn der Erfindung ausgebildet.

Die Anordnung der Steh- und Sitzplätze in Fig. 1 ist eine beispielhafte Anordnung in einem erfindungsgemäßen Personenbeförderungsfahrzeug und kann selbstverständlich in anderen Fahrzeugen variieren.

Im unteren Bild der Fig. 1 ist eine Ansicht von oben dargestellt, die verschiedene mögliche erste Passagierplätze 2 mit den, die Passagierplätze 2 umgebenden Führungsschienen 7 und darin geführten verschiebbaren Elementen 5 zeigt, die gleichzeitig auch als weitere Passagierplätze 4 fungieren. Die einzelnen ersten Passagierplätze 2 der Fig. 1 und insbesondere deren geometrische Formen sind in Fig 2 näher dargestellt.

Jeder erste (und gleichzeitig zweite) Passagierplatz 2 ist in Fig. 1 unten mit verschiedenen verschiebbaren Elementen 5 und in verschiedenen Stellungen der verschiebbaren Elemente 5 dargestellt. So zeigen beispielhaft: a) einen Sitzplatz in Offenstellung, b) einen Stehplatz in Offenstellung, c) einen Stehplatz in Geschlossenstellung, d) einen Sitzplatz der in Relation zu Stehplatz c) (als zweiter Passagierplatz) in Geschlossenstellung ist und in Relation zu Sitzplatz e) in Offenstellung, e) Sitzplatz in Offenstellung in Relation zu d) und in Geschlossenstellung in Relation zu f), f) Stehplatz in Offenstellung, g) Stehplatz in Geschlossenstellung, h) Stehplatz in Offenstellung, i) Sitzplatz in Geschlossenstellung.

Ein Ausgang 9 ermöglicht den Passagieren den Zustieg und Ausstieg aus dem Personenbeförderungsfahrzeug.

Die Führungsschienen 7 sind für Sitzplätze im Wesentlichen kreisförmig und für Stehplätze im Wesentlichen rechteckig verlaufend ausgebildet. Die Führungsschienen 7 verlaufen dabei zumindest abschnittsweise spiralförmig, so dass zumindest abschnittsweise zwei verschiebbare Elemente 5 oder zwei Teile eines verschiebbaren Elementes 5 radial hintereinander angeordnet sein können.

Fig. 2 zeigt den möglichen Aufbau, bzw. mögliche Ausführungsformen und Geometrien der Führungsschienen 7 und der darin geführten verschiebbaren Elemente 5. Insbesondere können, wie in Fig. 2 l) m) n) und o) ersichtlich, in einer Führungsschiene 7 zwei verschiebbare Elemente 5 geführt sein. Dabei können die zwei verschiebbaren Elemente 5 so ausgebildet sein, dass die beiden verschiebbaren Elemente 5 in einer Geschlossenstellung den Passagierplatz vollumfänglich umgeben (Abbildungen l) und n)). In einer Offenstellung können die beiden verschiebbaren Elemente 5 so ausgebildet und angeordnet sein, dass etwa die Hälfte des Umfangs um den Passagierplatz von den verschiebbaren Elementen 5 abgedeckt ist, wobei die verschiebbaren Elemente 5 jedoch nicht zu einem jeweiligen zugeordneten zweiten Passagierplatz 4 hin abtrennen.

Abgebildet sind somit in Fig. 2 spiralförmige, annähernd j) runde und annähernd k) rechteckige Führungsschienen 7. Bilder l) und m) zeigen die verschiebbaren Elemente 5, insbesondere elastische Elemente oder Rollos, wenn die Passagierzellen offen sind, inklusive Türgriffen 8, die an den verschiebbaren Elementen 5 ausgebildet sind, nämlich bevorzugt jeweils an einem Ende eines verschiebbaren Elements 5. Bilder n) und o) zeigen die verschiebbaren Elemente 5, wenn die Passagierzellen um die ersten Passagierplätze 2 geschlossen sind - wieder inklusive den Türgriffen 8.

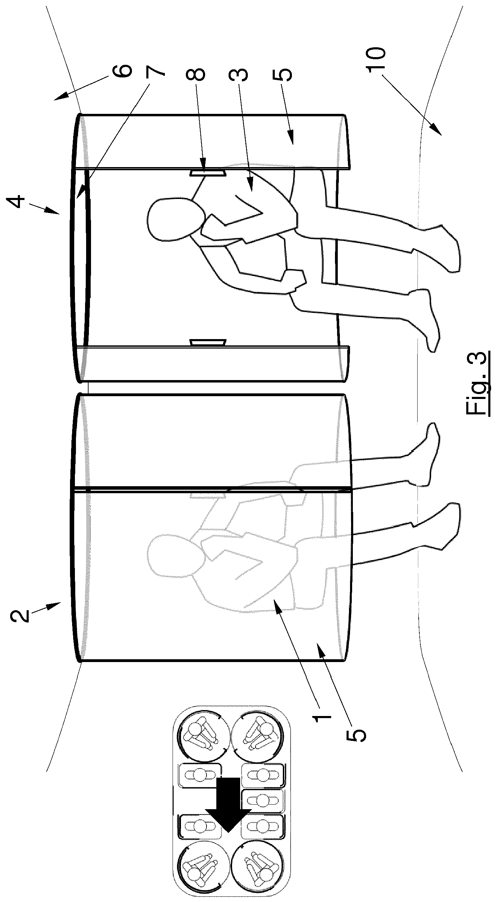

Fig. 3 zeigt eine runde Ausführung einer Passagierzelle, also der verschiebbaren Elemente 5 die einen ersten Passagierplatz 2 umgeben, im geschlossenen (links) und offenen Zustand (rechts). Die Lage der beiden Passagierplätze 2, 4 im Personenbeförderungsfahrzeug (entsprechend Fig. 1, unten) ist in der kleinen Abbildung links durch einen Pfeil dargestellt. Beispielhaft ist der linke Passagierplatz in den Fig. 2, 3 und 4 als erster Passagierplatz 2 und der rechte als zweiter Passagierplatz 4 bezeichnet. Da jeweils beide Passagierplätze mit gleichartigen verschiebbaren Elementen 5 ausgebildet sind, könnte auch umgekehrt jeweils der rechte Passagierplatz als erster Passagierplatz 2 und der linke als zweiter Passagierplatz 4 gesehen werden.

In der Ausführung der Fig. 2 sind die verschiebbaren Elemente 5 an Führungsschienen 7 an der Fahrzeugdecke 6 befestigt und reichen bis zu einer festgelegten Höhe über dem Boden 10 des Fahrzeuges. Diese, von der Decke 6 hängende Variante ist beispielsweise in jenen Bereichen eines Fahrzeuges von Vorteil, in denen der Boden 10 uneben ist oder Platzmangel herrscht, zum Beispiel durch ein Radhaus.

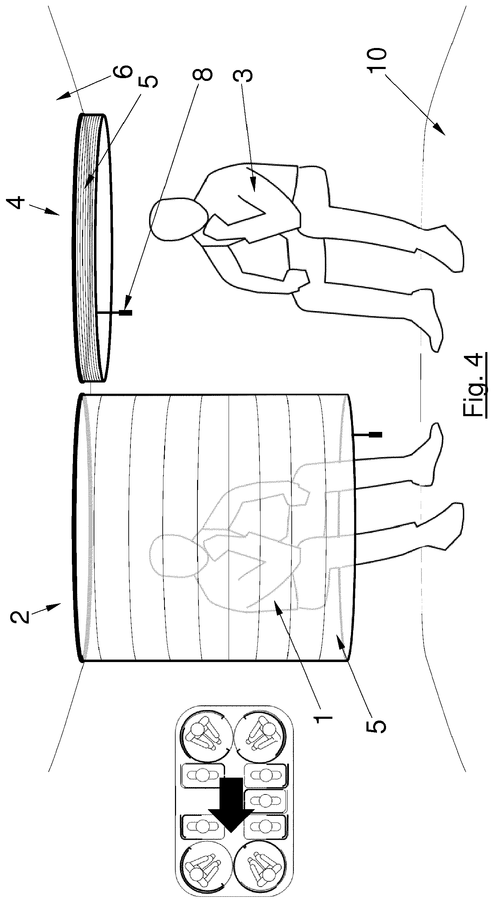

Fig. 4 zeigt eine andere mögliche Ausführungsform der runden Variante der verschiebbaren Elemente 5 mit einer Art von Plissee, welche an der Fahrzeugdecke 6 befestigt ist und mittels Griff 8 als Zuziehhilfe nach unten und nach oben verschoben werden kann um die Privatsphäre zu schützen.

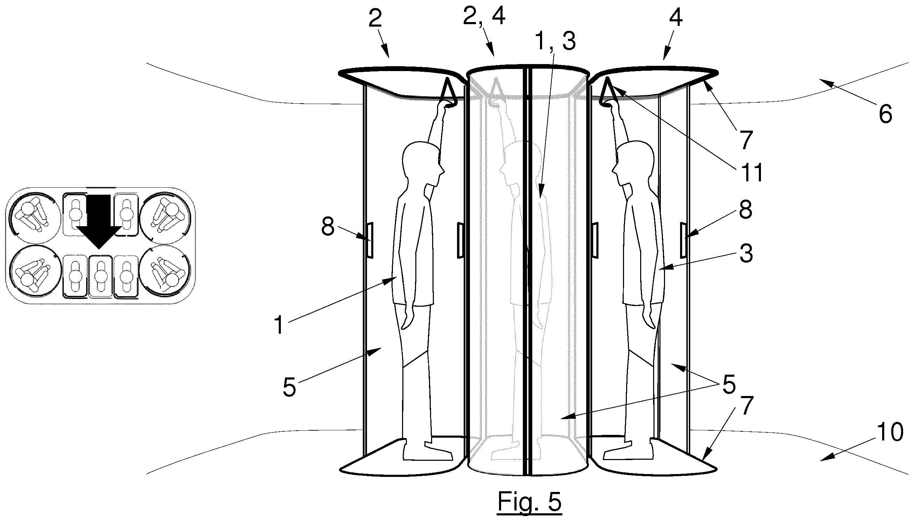

Fig. 5 zeigt eine rechteckige Ausführung der Passagierzellen bzw. verschiebbaren Elemente 5 im geschlossenen (mitte) und offenen Zustand (links und rechts). In dieser Ausführung sind die verschiebbaren Elemente 5 an Führungsschienen 7 an der Fahrzeugdecke 6 und am Fahrzeugboden 10 befestigt und reichen vom Boden 10 bis zur Decke 6. Diese Variante ist besonders bevorzugt bei einem flachem Boden 10, wo keine Unebenheiten herrschen. Innerhalb der Passagierzelle, also des im geschlossenen Zustand durch die verschiebbaren Elemente 5 begrenzten Raums, ist an der Decke 6 jeweils ein Haltegriff 11 ausgebildet, so dass sich stehende Passagiere daran festhalten können.

### Bezugszeichenliste

- 1: Person
- 2: erster Passagierplatz
- 3: weitere Person
- 4: zweiter Passagierplatz
- 5: verschiebbares Element
- 6: Decke
- 7: Führungsschiene
- 8: Griff
- 9: Ausgang
- 10: Boden
- 11: Haltegriff

## Patentansprüche

1. Personenbeförderungsfahrzeug, umfassend zumindest einen zur Beförderung einer Person (1) vorgesehenen Sitzplatz oder Stehplatz als ersten Passagierplatz (2), und einen zur Beförderung einer weiteren Person (3) vorgesehenen Sitzplatz oder Stehplatz als zweiten Passagierplatz (4),
**dadurch gekennzeichnet, dass** zumindest ein verschiebbares Element (5) im Bereich des ersten Passagierplatzes (2) vorgesehen ist, wobei das verschiebbare Element (5) an der Decke (6) des Personenbeförderungsfahrzeugs befestigt ist, wobei das verschiebbare Element (5) durch die Person (1) auf dem ersten Passagierplatz (2) in eine Geschlossenstellung verschiebbar ist, in welcher das verschiebbare Element (5) eine zumindest halbumfängliche Trennung um die Person (1) zwischen dem ersten Passagierplatz (2) und dem zweiten Passagierplatz (4) bildet, wobei das verschiebbare Element (5) durch die Person (1) auf dem ersten Passagierplatz (2) in eine Offenstellung verschiebbar ist, in welcher das verschiebbare Element (5) keine Trennung zwischen dem ersten Passagierplatz (2) und dem zweiten Passagierplatz (4) bildet.

2. Personenbeförderungsfahrzeug nach Anspruch 1,
**dadurch gekennzeichnet, dass** das verschiebbare Element (5) in der Geschlossenstellung die Person (1) auf dem ersten Passagierplatz (2) vollumfänglich umgibt.

3. Personenbeförderungsfahrzeug nach Anspruch 1 oder 2,
**dadurch gekennzeichnet, dass** das verschiebbare Element (5) horizontal verschiebbar ist und an der Decke (6) des Personenbeförderungsfahrzeugs in einer Führungsschiene (7) geführt ist.

4. Personenbeförderungsfahrzeug nach Anspruch 3,
**dadurch gekennzeichnet, dass** die Führungsschiene (7) an der Decke (6) des Personenbeförderungsfahrzeugs im Wesentlichen kreisförmig oder rechteckig oder quadratisch verläuft.

5. Personenbeförderungsfahrzeug nach Anspruch 4,
**dadurch gekennzeichnet, dass** die Führungsschiene (7) an der Decke (6) des Personenbeförderungsfahrzeugs zumindest abschnittsweise spiralförmig verläuft, so dass zumindest abschnittsweise zwei verschiebbare Elemente (5) oder zwei Teile eines verschiebbaren Elementes (5) radial hintereinander angeordnet sein können.

6. Personenbeförderungsfahrzeug nach zumindest einem der vorhergehenden Ansprüche,
**dadurch gekennzeichnet, dass** das verschiebbare Element (5) vertikal verschiebbar ist und nach unten in die Geschlossenstellung verschiebbar ist und nach oben in die Offenstellung verschiebbar ist.

7. Personenbeförderungsfahrzeug nach zumindest einem der vorhergehenden Ansprüche,
**dadurch gekennzeichnet, dass** das verschiebbare Element zumindest einen Griff (8) zum Verschieben aufweist.

8. Personenbeförderungsfahrzeug nach zumindest einem der vorhergehenden Ansprüche,
**dadurch gekennzenet**, dass das verschiebbare Element (5) als Jalousie, Rollo, Vorhang, Plissees, oder als miteinander verbundene plattenförmige Elemente ausgebildet ist.

9. Personenbeförderungsfahrzeug nach zumindest einem der vorhergehenden Ansprüche,
**dadurch gekennzenet**, dass das verschiebbare Element (5) transparent oder semitransparent ausgebildet ist.

10. Personenbeförderungsfahrzeug nach zumindest einem der vorhergehenden Ansprüche,
**dadurch gekennzenet**, dass zumindest ein verschiebbares Element (5) im Bereich des zweiten Passagierplatzes (4) vorgesehen ist, so dass der zweite Passagierplatz (4) zum ersten Passagierplatz (2) hin ebenso getrennt werden kann, wie umgekehrt.

11. Personenbeförderungsfahrzeug nach zumindest einem der vorhergehenden Ansprüche,
**dadurch gekennzenet**, dass das Personenbeförderungsfahrzeug mehrere zur Beförderung je einer Person (1) vorgesehene Sitzplätze oder Stehplätze als erste Passagierplätze (2), und mehrere zur Beförderung je einer weiteren Person (3) vorgesehene Sitzplätze oder Stehplätze als zweite Passagierplätze (4) aufweist, wobei jeweils zumindest ein verschiebbares Element (5) im Bereich jedes ersten Passagierplatzes (2) vorgesehen ist, wobei das jeweilige verschiebbare Element (5) an der Decke (6) des Personenbeförderungsfahrzeugs befestigt ist, wobei das verschiebbare Element (5) jeweils durch eine Person (1) auf dem ersten Passagierplatz (2) in eine Geschlossenstellung verschiebbar ist, in welcher das verschiebbare Element (5) eine zumindest halbumfängliche Trennung um die Person (1) zwischen dem jeweils ersten Passagierplatz (2) und zumindest einem zweiten Passagierplatz (4) bildet, wobei das verschiebbare Element (5) jeweils durch die Person (1) auf dem ersten Passagierplatz (2) in eine Offenstellung verschiebbar ist, in welcher das verschiebbare Element (5) keine Trennung zwischen dem jeweiligen ersten Passagierplatz (2) und zumindest einem zweiten Passagierplatz (4) bildet.
